# EUROPEAN PATENT APPLICATION

(11) **EP 1 944 253 A1**
(43) Date of publication of application: **16.07.2008**
(21) Application number: 08000080.5
(22) Date of filing: 04.01.2008
(51) Int. Cl.: B65G 37/00, A23N 7/04

(54) **Device for transporting elongated objects**

(30) Priority: 15.01.2007 NL 1033230
(71) Applicant: Sormac B.V., 5916 PN Venlo (NL)
(72) Inventor: Haffmans, Hubertus Ernest Ferdinand Marie, 5911 EE Venlo (NL)
(74) Representative: Bleukx, Lucas Lodewijk M.

(57) **Abstract**

Device for the transporting of elongated objects, in particular rod-shaped vegetables such as asparagus, carrots and suchlike, comprising at least one pair of transporting rollers (1,2) which together form a press nip and which can be driven in a rotating manner, whereby each transporting roller is mounted in a rotating manner on a swivelling arm (5,6) that rotates around a swivelling axle (7,8) that is primarily parallel to the axle of rotation (3,4) of the corresponding transporting roller, whereby seen in the direction of movement (C) of the elongated object the swivelling axle is behind the rotating axle of the corresponding transport roller.

## Description

The invention relates to a device for the transporting of elongated objects, in particular rod-shaped vegetables such as asparagus, carrots and suchlike, comprising at least one pair of transporting rollers which together form a press nip and which can be driven in a rotating manner, whereby each transporting roller mounted in a rotating manner on a swivelling arm that rotates around a swivelling axle that is primarily parallel to the rotating axle of the corresponding transporting roller.

A device of this type is known from American patent specification 5 857 404.

In this known device, seen in the direction of movement of the elongated object the swivelling axle of each transporting roller lies before the axle of rotation of the transporting roller.

As a result of this arrangement, through the rotation of the transporting rollers a couple is generated in the swivelling arms as a result of which the swivelling arms have a tendency to turn in a direction whereby the transporting rollers move away from each other. The result of this is that the elongated objects are not always clasped with sufficient force in the nip between the transport rollers in order to guarantee correct transportation.

The aim of the invention is to create a device of the above type whereby this disadvantage is avoided.

This objective is achieved in accordance with the invention in that seen in the direction of movement of the elongated objects the swivelling axle lies behind the axle of rotation of the corresponding transporting roller.

By way of this arrangement the couple generated through the rotation of the transporting rollers exerts a force on the swivelling arms which moves the transporting rollers towards each other.

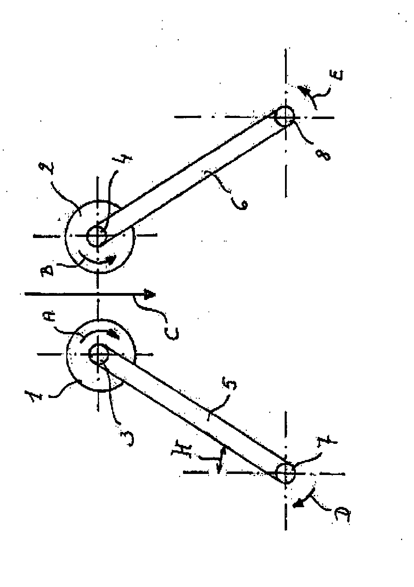

Other features and advantages will be become clear from the following description in which reference is made to the attached drawing in which a section of the transporting device in accordance with the invention is schematically illustrated.

The transporting device as is shown in the attached drawing can be used in a device such as that described in the American patent specification 5 857 404 or devices comparable therewith in which a number of units as shown in the drawing are placed one behind the other.

A transporting unit of this type comprises two transporting rollers 1, 2 which are each mounted on axles 3, 4 that are borne in a rotating manner on one end of swivelling arms 5, 6. The other end 7, 8 of the swivelling arms is borne in a rotating manner in a frame that is not shown in more detail. If desired, the swivelling arms can be pushed towards each other by means that are not shown, whereby the rollers 1, 2 are pressed against each other with a certain pressure. Such means can comprise springs, pneumatic or hydraulic cylinders or similar devices.

The rollers 1, 2 can be covered with a suitable material, for example a rubberlike material so that the elongated object to be transported is held with sufficient force by the rollers 1, 2 without being damaged.

The rollers 1, 2 can be driven by means of a system such as that described in the aforementioned American patent specification. However, preferably the axles 3, 4 of the rollers 1, 2 are each driven separately by means of a stepped motor.

The direction of rotation of the rollers 1, 2 is indicated by the arrows A and B so that an elongated product is transported in the direction of arrow C. As the points of rotation 7, 8 of the swivelling arms 5, 6 seen in the direction of movement C are located after the rotating arms 3, 4 for the rollers 1, 2, through the rotating movement of the rollers 1, 2 on the swivelling arms 5, 6 a couple is exerted in the direction of the arrows D and E.

This couple will therefore help to keep the elongated product held firmly between the rollers 1, 2, as a result of which transporting is improved.

By way of this arrangement the introduction of an elongated product into the nip between the rollers 1, 2 can encounter a certain resistance. To keep this resistance manageable, the smallest angle H between the swivelling arms 5, 6 and the direction of movement of the elongated objects must not be greater than 60°, preferably even smaller than 45°.

The transporting device as described and illustrated is suitable for transporting elongated products by way of transporting rollers with horizontal axles as described in the aforementioned American patent specification. Through the self-clasping effect of the arrangement in accordance with the invention it is possible also to place the rollers 1, 2 at a different angle with regard to the horizontal axles and even to work with rollers 1, 2 with vertically arranged axles. During transporting the elongated products should drop precisely through the consecutive roller axles. This provides a greater flexibility in the design of an apparatus equipped with such transporting devices.

It is evident that the invention is not restricted to the described and illustrated forms of embodiment, but that in the context of the description of the claims numerous modifications can be incorportated that form an integral part of the invention.

## Claims

1. Device for the transporting of elongated objects, in particular rod-shaped vegetables such as asparagus, carrots and suchlike, comprising at least one pair of transporting rollers which together form a press nip and which can be driven in a rotating manner, whereby each transporting roller is mounted in a rotating manner on a swivelling arm that rotates around a swivelling axle that is primarily parallel to the axle of rotation of the corresponding transporting roller, **characterised in that** seen in the direction of movement of the elongated object the swivelling axle lies behind the rotating axle of the corresponding transporting roller.

2. Device in accordance with claim 1, **characterised in that** the axle of rotation and the swivelling axle are mainly vertically oriented in normal use of the device.

3. Device in accordance with any one of claims 1 or 2 **characterised in that** the each rotation axle is separately driven by way of a stepped motor.

4. Device in accordance with any one of claims 1 - 3, **characterised in that** in the condition in which the two transporting rollers of a pair are in contact with each other the swivelling arm forms an angle with the transporting device that is less than 60°, preferably less than 45°.

5. Device in accordance with any one of claims 1 - 4 **characterised in that** the two transport rollers of each pair are pressed towards each other by spring force.
